# EUROPEAN PATENT APPLICATION

(11) **EP 1 308 804 A1**
(43) Date of publication of application: **07.05.2003**
(21) Application number: 01309412.3
(22) Date of filing: 06.11.2001
(51) Int. Cl.: G05B 19/042

(54) **Control loop apparatus and method thereof**

(71) Applicant: Agilent Technologies, Inc. (a Delaware corporation), Palo Alto, CA 94303 (US)
(72) Inventor: Arthur, Simon, Ipswich, Suffolk IP4 3AS (GB)
(74) Representative: Coker, David Graeme

(57) **Abstract**

A laser device forming part of an optical transmitter unit will require operating parameters, such as power and extinction ratio to be set. A known technique to set either the power or the extinction ratio involves temporary connections in the form of probe pins to be applied across pads of a circuit board coupled to the laser device, fixed resistors being subsequently connected across the pads. Such a technique is tedious and difficult and once fixed resistors have been connected they are difficult to remove, so the operating parameters are not easily altered. Consequently, the present invention provides a control loop apparatus (5) comprising a measurement and control arrangement (10) and an optical transmitter unit (20). The control loop apparatus (5) is capable of controlling the operating parameters, such as the power and the extinction ratio of the laser device in an automated manner without the need for intrusive, temporary connections to be made on the circuit board.

## Description

The present invention relates to a control loop apparatus of the type used to measure parameters of electronic devices, such as a power and an extinction ratio of a laser device. The present invention also relates to a method of setting the above parameters.

It is well known that, upon completion of assembly of an optical transmitter unit and prior to a final test, a laser device forming part of the optical transmitter unit will require operating parameters, such as power and extinction ratio, to be set. A known technique used to set either the power or the extinction ratio of the laser device require temporary connections in the form of probe pins to be applied across pads of a circuit board coupled to the laser device, fixed resistors being subsequently connected across the pads. The probe pins are connected to an external analogue (manual) or digital potentiometer which is then used to vary the resistance across the pads, thereby on the circuit board varying the extinction ratio or the power of the laser device as desired until suitable power and extinction ratio values are achieved. Once the resistances are found, the probe pins are removed from the circuit board pads and replaced with the fixed resistors of the values found.

Connecting the probe pins to the pads of the circuit board requires careful alignment of the probe pins with the pads. Due to the small scale of the circuit board, i.e. small pads, such an alignment process is often tedious and difficult. Further, over time the probe pins wear, which increases the difficulties encountered during alignment and also requires their eventual replacement. Once fixed resistors have been connected to the circuit board, the fixed resistors are difficult to change. Consequently, should the above mentioned parameters such as the power and the extinction ratio of the laser device stray from their originally set values, the parameters cannot be easily altered without de-soldering the resistors from the circuit board.

According to a first aspect of the present invention there is provided a control loop apparatus comprising a measurement and control arrangement to measure a parameter associated with a device and generate control information, the device comprising a receiver unit, characterised in that the receiver unit is coupled to an electronically programmable component, and the measurement and control arrangement comprises a transmitter unit to transmit the control information as a control signal to the receiver unit, the electronically programmable component being arranged to assume a value in accordance with the control information.

Preferably, the value of the electronically programmable component is dictated by the control information and corresponds to the parameter.

Preferably, the electronically programmable component is a digital potentiometer.

Preferably, the device is an optical transmitter unit. More preferably, the optical transmitter unit comprises a laser.

The parameter may be an extinction ratio or a power output.

According to a second aspect of the present invention, there is provided a method of setting a parameter associated with a device comprising an electronically programmable component, the method comprising the steps of: measuring the parameter associated with the device; the method being characterised by: generating control information in response to the measurement of the parameter; transmitting the control information as a control signal to the device; receiving the control signal; using the control information to set the electronically programmable component.

According to a third aspect of the present invention, there is provided a test unit comprising a measurement and control arrangement for measuring, when in use, a parameter associated with a device, and generating control information, characterised by a transmitter unit arranged to transmit the control information as a control signal for receipt by the device so as to control the parameter.

According to a fourth aspect of the present invention, there is provided an electronic device comprising a receiver unit, the receiver unit being arranged to receive, when in use, a control signal corresponding to control information for controlling a parameter corresponding to the electronic device, characterised by an electronically programmable component coupled to the receiver unit, the electronically programmable component being arranged to assume a value in accordance with the control information.

It is thus possible to provide a control loop apparatus, a test unit, an electronic device and a method therefor capable of controlling the parameters, such as the power and the extinction ratio of the laser device of the optical transmitter unit, in an automated manner, thereby enabling faster and more accurate setting of the parameters than using known techniques; a more accurately calibrated laser device will also result. The need for intrusive temporary connections to be made to the circuit board when setting the parameters is also obviated. Setting of the parameters does not have to be carried out at any particular stage of manufacture of the optical transmitter unit, because the provision of the wireless link unit does not require any special access to the circuit board.

At least one embodiment of the invention will now be described, by way of example only, with reference to the accompanying drawings, in which:
**Figure 1** is a schematic diagram of a control loop apparatus constituting an embodiment of the present invention.
**Figure 2** is a schematic diagram of an optical transmitter unit of Figure 1,
**Figure 3** is a schematic diagram of a first wireless link unit of Figure 1,
**Figure 4** is a schematic diagram of a second wireless link unit of Figure 1, and
**Figure 5** is a flow diagram for use with the apparatus of Figure 1.

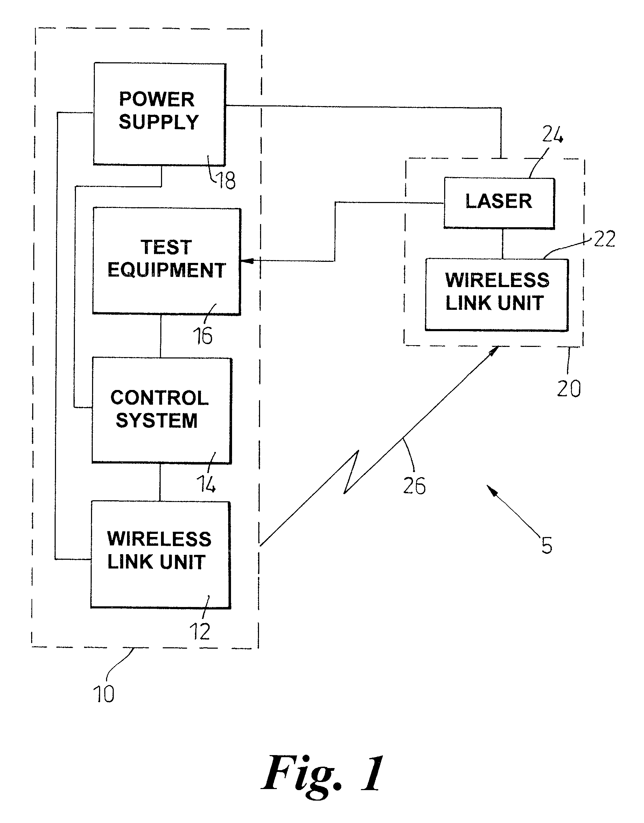

Referring to Figure 1, a control loop apparatus 5 comprises an automatic test unit 10 and an optical transmitter unit 20. The test unit 10 comprises a first wireless link unit 12 coupled to a control system 14, test equipment 16 coupled to the control system 14, and a power supply 18 coupled to the control system 14 and the first wireless link unit 12. The optical transmitter unit 20 comprises a laser device 24 coupled to a second wireless link unit 22 on a circuit board (not shown). The first wireless link unit 12 is capable of communicating with the second wireless link unit 22 using Radio Frequency (RF) signals. The power supply 18 is also coupled to the circuit board in order to provide power to the optical transmitter unit 20.

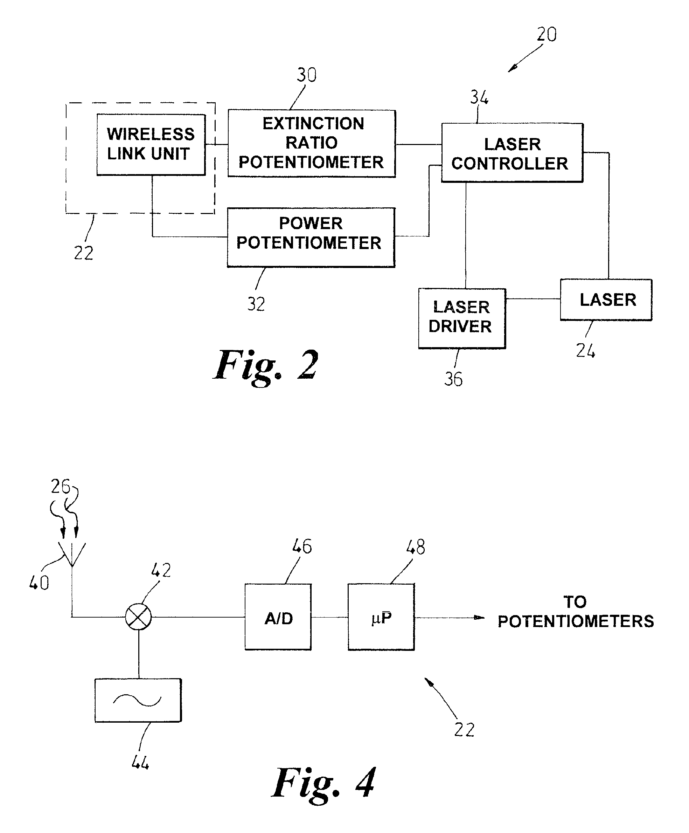

Referring to Figure 2, the second wireless link unit 22 of the optical transmitter unit 20 is coupled to an extinction ratio potentiometer 30 and a power potentiometer 32. The extinction ratio potentiometer 30 and the power potentiometer 32 are disposed on the circuit board and coupled to a laser controller 34 which is coupled to a laser driver 36 and the laser device 24. The laser device 24 is also coupled to the laser driver 36. The extinction ratio and power potentiometers 30, 32 are electronically programmable components, for example digital potentiometers, such as of the type manufactured by Maxim Integrated Products/Dallas Semiconductor.

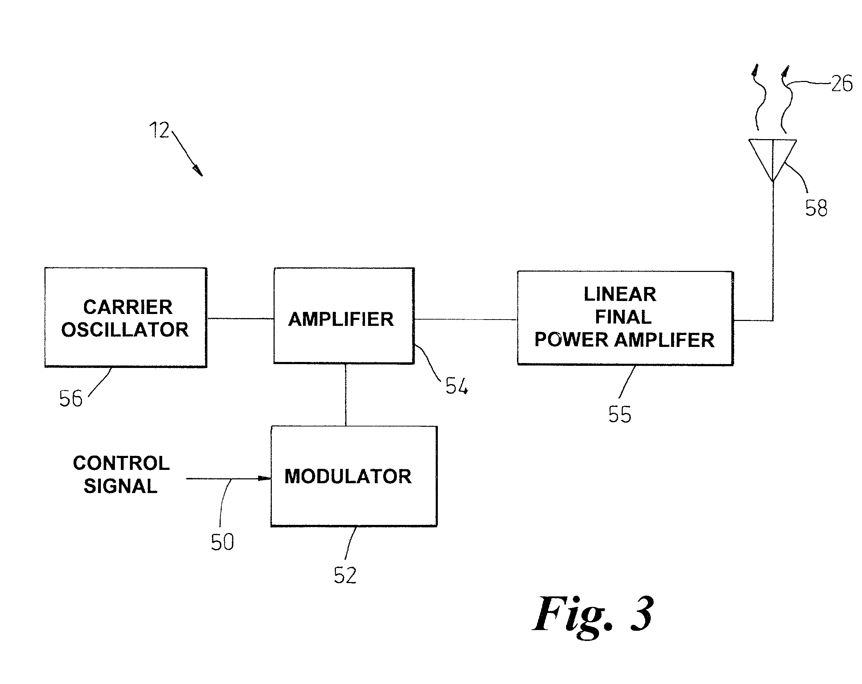

Referring to Figure 3, the first wireless link unit 12 comprises a modulator 52 for receiving a control signal 50 for controlling one or both of the extinction ratio and power potentiometers 30, 32 (not shown in Figure 3), the modulator 52 being coupled to an amplifier 54. A carrier oscillator 56 for generating a carrier signal is coupled to the amplifier 54, the amplifier 54 also being coupled to a first antenna 58 via, for example, a linear power amplifier 55.

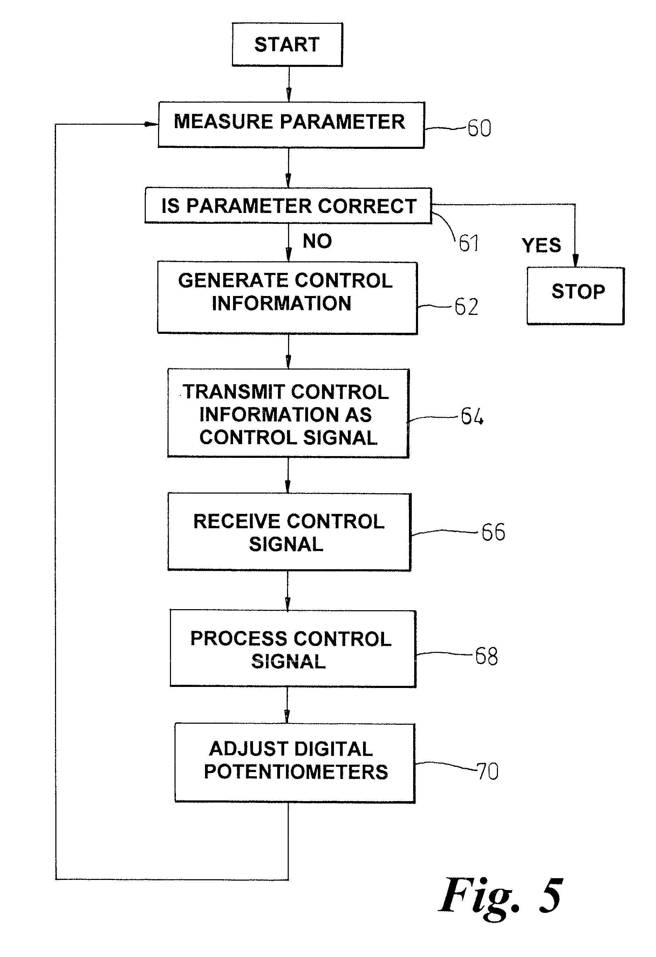

Referring to Figure 4, the second wireless link unit 22 comprises a second antenna 40 coupled to a mixer 42 which is coupled to a local oscillator 44 and an analogue to digital converter 46. The analogue to digital converter 46 is coupled to a processor unit 48 which is coupled to the extinction ratio potentiometer 30 and the power potentiometer 32 (both not shown in Figure4).

In operation (Figure 5) of the control loop apparatus 5 of Figure 1, the laser device 24 emits electromagnetic radiation (not shown) with an initial extinction ratio and at an initial power output as a result of initial settings of the extinction ratio potentiometer 30 and the power potentiometer 32 of the optical transmitter unit 20. The test equipment 16 of the test unit 10 measures (step 60) one or more parameters associated with the electromagnetic radiation emitted by the laser device 24. The control system 14 is pre-programmed with the required values of power output and extinction ratio for the laser device 24. If the measured parameters associated with the electromagnetic radiation emitted by the laser device 24 do not match the required values of power output and extinction ratios (step 61) then the control system 14, in response to measurements made by the test equipment 16, generates (step 62) the control signal 50, the control signal 50 being converted to an RF control signal 26 and transmitted (step 64) by the first wireless link unit 12 to the second wireless link unit 22. The control signal 26 comprises control information to instruct the microprocessor 48 to either alter or set the values of power output and/or extinction ratio of the laser device 24 as appropriate by adjusting settings of the power potentiometer 32 and/or the extinction ratio potentiometer 30, respectively.

Upon receipt (step 66) of the control signal 26 at the second antenna 40, the second wireless link unit 22 demodulates the control signal 26 and converts the demodulated control signal to a digital signal that is received by the microprocessor 48. The microprocessor 48 processes (step 68) the instructions in the form of the digital signal and sets (step 70) and/or adjusts the settings of the extinction ratio potentiometer 30 and/or the power potentiometer 32. In this respect, the instructions correspond to, *inter alia,* resistance values for the extinction ratio potentiometer 30 and/or power potentiometer 32. The resistance values to which the extinction ratio potentiometer 30 and the power potentiometer 32 are set cause the laser controller 34 to control the laser device 24 in conjunction with the laser driver 36 so as to generate electromagnetic radiation having a modified extinction ratio and/or power output that are desired. The above described process of measuring and adjusting (and/or setting) the power and extinction ratio parameters (steps 60 to 70) is repeated until the measured parameters match (step 61) the required values of power output and extinction ratio, whereupon the above described process stops.

## Claims

1. A control loop apparatus (5) comprising a measurement and control arrangement (10) to measure a parameter associated with a device and generate control information, the device comprising a receiver unit (22), **characterised in that** the receiver unit (22) is coupled to an electronically programmable component (30, 32), and the measurement and control arrangement (10) comprises a transmitter unit (12) to transmit the control information as a control signal (26) to the receiver unit (22), the electronically programmable component (30, 32) being arranged to assume a value in accordance with the control information.

2. An apparatus as claimed in Claim 1, wherein the value of the electronically programmable component (30, 32) is dictated by the control information and corresponds to the parameter.

3. An apparatus as claimed in Claim 1 or Claim 2, wherein the electronically programmable component (30, 32) is a digital potentiometer.

4. An apparatus as claimed in any one of the preceding claims, wherein the device is an optical transmitter unit.

5. An apparatus as claimed in Claim 4, wherein the optical transmitter unit comprises a laser (24).

6. A method of setting a parameter associated with a device comprising an electronically programmable component, the method comprising the steps of:
measuring (60) the parameter associated with the device; the method being **characterised by**:
generating (62) control information in response to the measurement of the parameter;
transmitting (64) the control information as a control signal to the device;
receiving (66) the control signal;
using (68) the control information to set (70) the electronically programmable component.

7. A test unit comprising a measurement and control arrangement (10) for measuring, when in use, a parameter associated with a device, and generating control information, **characterised by** a transmitter unit (12) arranged to transmit the control information as a control signal (26) for receipt by the device so as to control the parameter.

8. An electronic device comprising a receiver unit (22), the receiver unit (22) being arranged to receive, when in use, a control signal corresponding to control information for controlling a parameter corresponding to the electronic device, **characterised by** an electronically programmable component (30, 32) coupled to the receiver unit (22), the electronically programmable component (30, 32) being arranged to assume a value in accordance with the control information.
